# EUROPEAN PATENT APPLICATION

(11) **EP 3 219 197 A1**
(43) Date of publication of application: **20.09.2017**
(21) Application number: 15804861.1
(22) Date of filing: 12.11.2015
(51) Int. Cl.: A01G 1/06

(54) **MACHINE FOR PRODUCING SEEDLINGS OR GRAFTS OF WOODY PLANTS**

(30) Priority: 12.11.2014 ES 201431656 P
(71) Applicant: Repiso Torello, Joan, 08191 Barcelona (ES)
(72) Inventor: Repiso Torello, Joan, 08191 Barcelona (ES)
(74) Representative: Isern-Jara, Nuria
(86) International application number: PCT/ES2015/070813
(87) International publication number: WO 2016/062913

(57) **Abstract**

A machine for producing seedlings or grafts of woody plants (1), comprising motorised cutting means for cutting stems and joining two previously cut stems to obtain a graft; means for supplying the paraffin that coats the graft join area; motorised displacement means that transport the graft from an area equipped with the cutting means to an expelling area, said displacement means having a plurality of gripping elements for securing the stems and grafts, each of said gripping elements being susceptible of rotating with respect to the means of transport in the area where the paraffin supply means are located; and means for expelling the graft for extracting the graft from the gripping element outwards.

## Description

### OBJECT OF THE INVENTION

The object of the present invention is to register a machine for producing seedlings or grafts of woody plants which incorporates notable innovations and advantages.

More specifically, the invention proposes the development of a machine for producing seedlings or grafts of woody plants as well as an automated process for producing seedlings or grafts of woody plants by joining two stems of different plant species defined in claim 20.

### BACKGROUND OF THE INVENTION

Grape phylloxera was introduced into France in 1866 and completely devastated vineyards in 1914. To recover the vineyards, two different plant varieties were grafted, the species having greater resistance being the one planted in the ground and forming the root system.

Grafting takes place by making a cut on one of the woody branches or stems, normally done manually, although the applicant is aware of a type of machine that makes cuts on woody stems. A worker then gathers a plurality of stems in one or both hands and coats them with paraffin to prevent the degradation of the area being handled. Lastly, the paraffin-coated stems are left to air-dry naturally.

However, although this method is advantageous for improving the yield of a crop, it requires a large number of people and is time-consuming, given that a large part of the operations are not carried out automatically. Moreover, the different means used are distributed inside an installation or facility in a scattered form, making it necessary for workers to move from one area to the other, causing a considerable loss of time by simply taking the stems or grafts from one work area to another.

Furthermore, the applicant is not aware of any current machine or apparatus which has all of the characteristics described in this specification and which is able to carry out a seedling or grafting process in a completely automated fashion.

### DESCRIPTION OF THE INVENTION

The present invention has been developed with the aim of providing a machine that constitutes a novelty within the field of application, and solves the drawbacks mentioned above while also contributing other additional advantages, which will become evident from the description provided below.

Therefore, an object of the present invention is to provide a machine for producing seedlings or grafts of woody plants, and is essentially characterised in that it comprises the following parts:
- motorised cutting means for cutting stems and joining two previously cut stems by fitting the two opposite ends together to obtain a graft;
- means for supplying the paraffin provided for coating the graft join area;
- motorised movement means that transport the graft from an area equipped with the cutting means to an expelling area outside of the machine, the movement means having a plurality of gripping elements for securing the stems and grafts mounted on a means of transport, each of said gripping elements being susceptible to rotating with respect to the means of transport in the area where the paraffin supply means are located; and
- means for expelling the graft outwards and for extracting the graft from the gripping element.

Thanks to these characteristics, a machine is obtained which completely groups together and automates a method for obtaining grafts and seedlings with out needing a large number of workers and handlers, in addition to optimising the production of grafts. Moreover, it guarantees that all of the grafts have gone through the different stages in a suitable and uniform manner, something that is not possible through manual manipulation.

In a particularly preferred embodiment, it includes cooling means to cool the area of the graft that is coated with paraffin, said cooling means arranged behind with respect to the paraffin supply means.

Preferably, the means of transport comprises a chain or belt that defines a closed loop by means of two rotating elements separated from one another, at least one of which is linked to a motor means.

In accordance with another aspect of the invention, the gripping elements comprise a gripper provided with a support piece fixed to the means of transport and a secondary support piece which is articulated in a rotational way to the support piece, wherein arranged in the secondary support piece is a pair of clamps facing each other which, in a closed condition, define a cavity susceptible of housing the stem and/or graft, each one of the clamps including elastic means.

Advantageously, the support piece and the secondary support piece are articulated by means of a rotational shaft.

In accordance with another characteristic of the invention, each one of the gripping elements comprises elastic means which act on each one of the clamps in a vertical direction and elastic means which act in a horizontal direction.

Additionally, the machine may include non-motorised rotational means which rotate the gripping element from a vertical position to a rotated position of essentially 90° oriented toward the paraffin supply means.

In accordance with another aspect of the machine of the invention, the non-motorised gripping means consists of an elongated fixed rod running in the same direction as the trajectory of the gripping elements held by a support structure, wherein the rod is provided with a series of bends defining a plurality of curved segments arranged in at least two parallel planes with respect to one another, such that at least one of the curved segments of the rod is connected to the paraffin supply means. Thus, by means of this simply constructed system, it is possible to carry out the rotating operation without motorised means, which would involve additional maintenance and an increase in the manufacturing costs of the machine.

Advantageously, the two ends of the rod have inclined segments with respect to the longitudinal axis of the rod, these segments being divergent from one another, which facilitate the bending operation of the gripping elements for subsequent operations, applying the paraffin and also the water, for example.

Preferably, the paraffin supply means comprise a refillable paraffin container open at the top, associated with a paraffin feeder.

Also preferably, the cooling means comprise a refillable container with a cooling liquid, such as water, open at the top.

The machine of the invention additionally includes a collapsible protective cover that covers the motorised movement means, thereby reducing the degree of dirt on the inside of the mechanical components and reducing the possibility of personal injury.

Advantageously, the protective cover has an upper horizontal segment which includes a recessed region, said recessed region being arranged before the area of the cutting means. This is an important aspect given that it facilitates the placement of the stems in the gripping elements for the worker before the cutting operation.

Preferably, the expelling means have a pneumatic actuator that in an extended position of a piston, said piston pushes the lower end of the gripping element so that it opens the gripper, releasing the graft from the cavity wherein the graft is housed. It is possible that the expelling means may include a second pneumatic actuator fixed to a support plate which acts in a synchronised way with respect to the pneumatic actuator, such that said second actuator has an axially movable piston which acts on a second pusher.

In accordance with another aspect, the cutting means have a vertically movable cutting blade linked to a motor means.

Additionally, the cutting means have vertically moveable centring means linked to the movement of the cutting blade in order to axially position the two stems joined together.

Preferably, the centring means comprises a contact surface on which a pressure element is arranged facing said contact surface, which is fixed to the end of a vertically movable shaft provided with an elastic spring which butts up against a plate.

Another object of the invention is to provide an automated process for producing seedlings or grafts of woody plants by joining two stems of different plant species, characterised by the fact that it comprises the following stages:
a) Placing two stems of different plant species in two adjacent and linearly movable gripping elements;
b) Cutting a first plant stem with a cutting means, such that a cut part remains connected to the cutting means and has on one of the ends thereof a termination with an extension;
c) Cutting a second plant stem with the cutting means so that it has a cut that is complimentary to the cut made on the first stem, such that one of the ends thereof has a termination with a slit with dimensions adaptable to the dimension of the extension;
d) Joining two cut portions by the ends with the complimentary terminations on the gripping element to obtain a graft or seedling which corresponds to the two different plant stems;
e) Coating the join area of the graft supported by the gripping element with a paraffin coating;
f) Cooling the paraffin coated area by means of a liquid cooler, preferably water; and
g) Expelling the graft from the support element.

Other characteristics and advantages of the machine object of the present invention will be evident from the description of a preferred, but not exclusive, embodiment, which is illustrated by way of non-limiting example in the accompanying drawings, wherein:

### BRIEF DESCRIPTION OF THE DRAWINGS

Figure 1 shows a perspective view of a machine for producing seedlings or grafts according to the present invention;
Figure 2 shows a perspective view of the machine represented in figure 1 with a collapsible protective cover in order to see the parts of the motorised movement means;
Figure 3 shows an exploded perspective view of a gripping element;

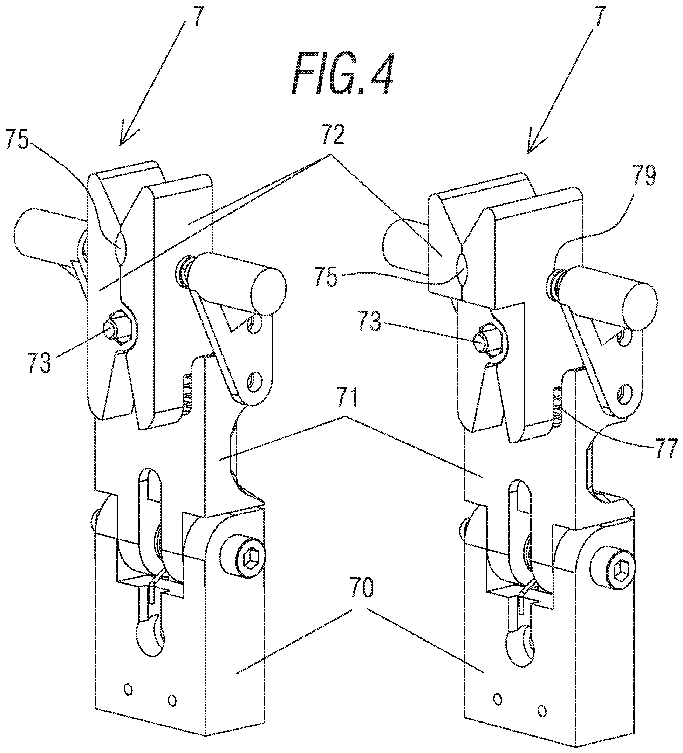

Figure 4 shows a pair of perspective views corresponding to two preferred embodiments of the gripping elements present in the machine of the invention;
Figure 5 shows a detailed perspective view of the paraffin supply means, the cooling means and the gripping means for the gripping elements;
Figure 5A is a detailed perspective view of the rod that enables the rotation of the gripper present in each one of the gripping elements;
Figure 6 is a detailed perspective view of the cutting means viewed from the front;

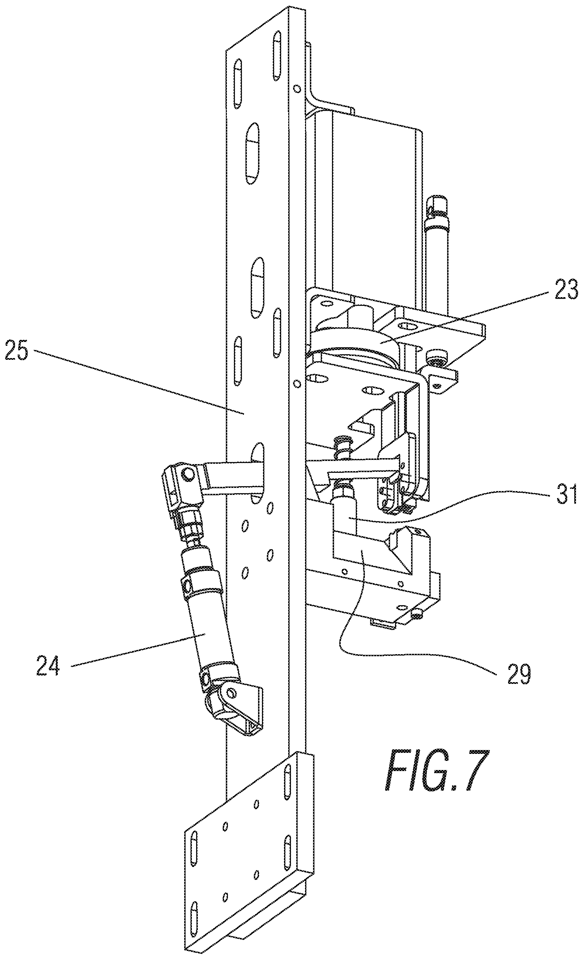

Figure 7 is a detailed perspective view of the cutting means shown in figure 6 viewed from behind; and
Figure 8 is a detailed perspective view of the expelling means; and
Figure 9 is a perspective view showing the way in which the two uncoupled plant stems are joined after being cut with the cutting means.

### DESCRIPTION OF A PREFERRED EMBODIMENT

In view of the aforementioned figures and, in accordance with the numbering adopted, an example of a preferred embodiment of the invention can be observed therein, which comprises the parts and elements indicated and described in detail below.

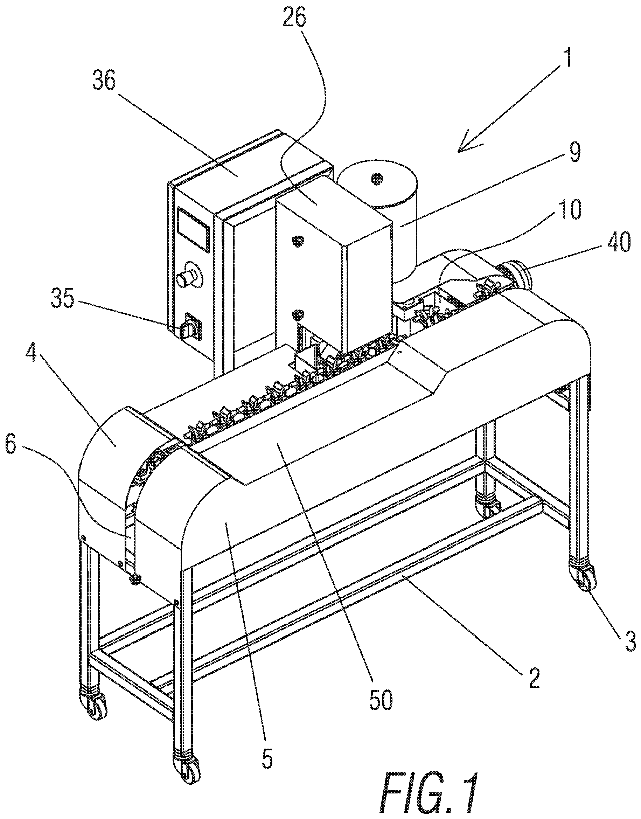

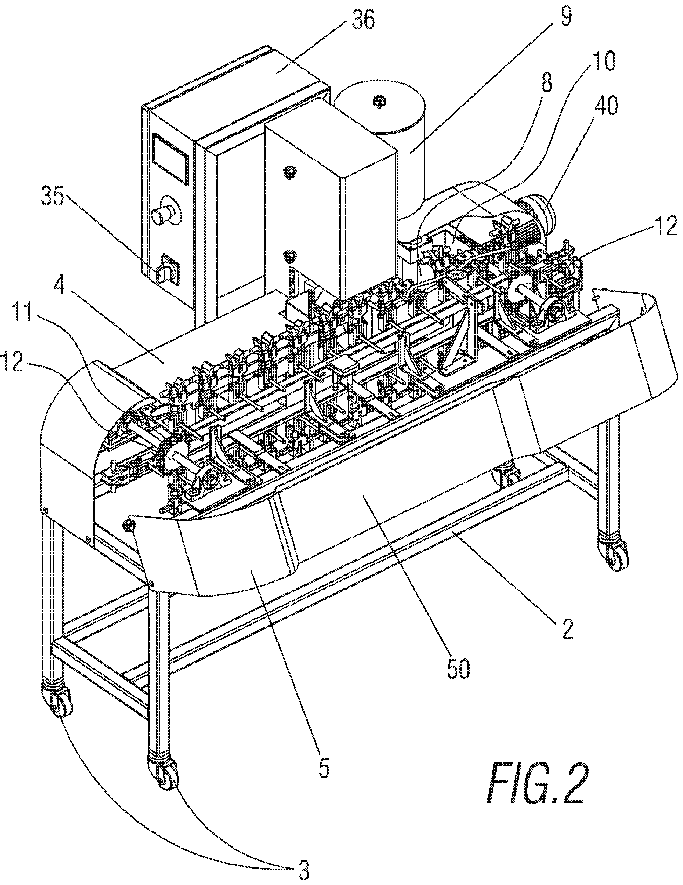

Therefore, as can be seen in the figures of this embodiment, the machine for producing seedlings or grafts of woody plants, generally indicated by the reference (1), comprises a frame (2) formed by a structure of metal bars which supports motorised cutting means to cut stems and join two previously cut stems to obtain a graft and paraffin supply means provided to coat the join area of the graft which will be further explained below. It is worth mentioning that the lower part of the frame (2) includes wheels (3) which enable the machine to be moved to any place it is needed, as can be seen in figures 1 and 2.

On the outside thereof, the machine (1) includes an upper housing (4) and a protective cover (5) separated from one another by an open longitudinal space (6), made from a conformed metal sheet which can fold since it is articulated, which covers the aforementioned motorised movement means. Said protective cover (5) has an upper horizontal segment that includes an elongated recessed region (50), said recessed region being arranged before the area of the cutting means.

Furthermore, the machine (1) has motorised movement means that transport the graft from an area equipped with the cutting means to an expelling area, outside of the machine (1), the movement means having a plurality of gripping elements (7) for securing the stems and grafts mounted on a means of transport, in which said gripping elements (7) protrude through the longitudinal open space (6).

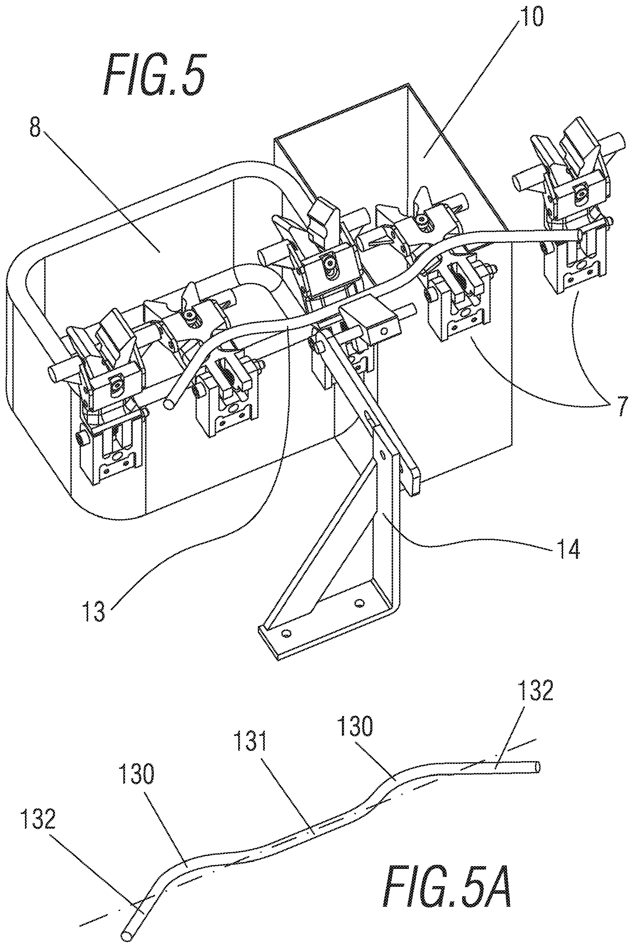

Each one of these gripping elements (7) being susceptible to rotating with respect to the means of transport in the area where the paraffin supply means are located. These paraffin supply means comprise a container (8) (see figure 5) open at the top and which may be refilled with paraffin material by means of the arrangement of a paraffin feeder (9).

Moreover, one end of the machine (1) is also provided with means for expelling the graft which enable each graft to be extracted from the corresponding gripping element (7) and subsequently dumped in a collection container (not shown), for example.

In addition to the aforementioned components, the machine includes cooling means which enable it to cool the area of the graft that is coated with the paraffin layer, said cooling means arranged behind the means for supplying the paraffin. In this specific case, the cooling means comprise a container (10) open at the top that can be easily refilled with a cooling liquid, preferably being water.

In this preferred embodiment of the invention, the means of transport comprise a toothed conveyer chain (11) which defines a closed loop by means of the arrangement of two cogwheels (12), arranged at the two ends of the machine (1), one of the cogwheels being linked to an electric motor (40) which enables torque to be transmitted to the toothed conveyer chain (11).

More specifically, each one of the gripping elements (7) comprises a gripper provided with a support piece (70) that is essentially generally U-shaped that is fixed to the means of transport and a secondary support (71) that is articulated in a rotational way to the support piece, wherein arranged in the secondary support piece is a pair of clamps (72) facing each other (making up the gripper) and articulated by a shaft (73) in a slotted hole (74), such that the slotted hole enables the longitudinal movement of the clamps (72) when the stems and/or grafts to be produced must be placed or expelled.

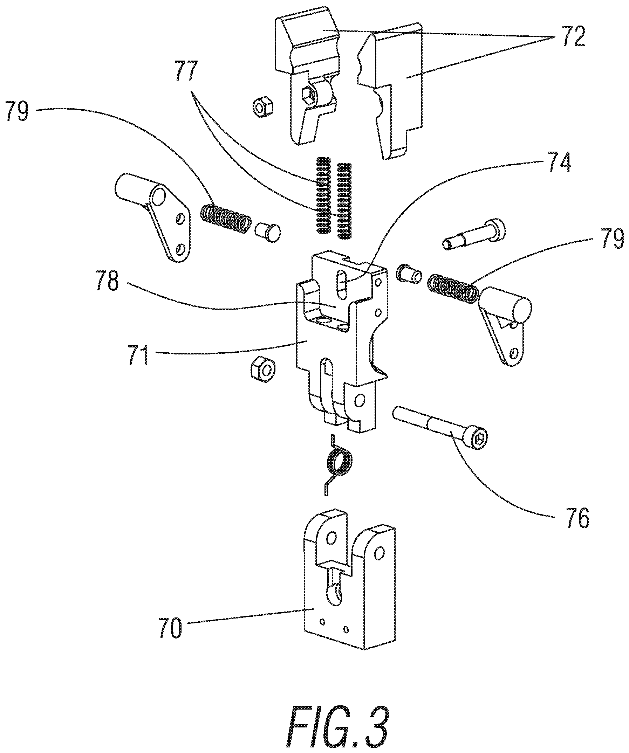

The pair of clamps (72) in a closed condition defines a cavity (75) wherein the stem and/or graft is housed, each one of the clamps (72) including elastic means which will be described in detail below. The support piece (70) and the secondary support piece (71) are made of a mouldable plastic material and articulated by means of a rotation shaft or rod (76) arranged transversally with respect to the gripper assembly. It is worth noting that arranged centrally on said rotation shaft (76) is a return spring (see figure 3) which facilitates the return to the position of rest thereof of the secondary support piece (71) with respect to the support piece (70) when it folds out during the operation of the machine, as will be further described below.

Furthermore, each one of the gripping elements (7) comprises elastic means which act on each one of the clamps (72) in a vertical direction and elastic means which act in a horizontal direction. As can be seen in figure 3, the elastic means which act in a vertical direction consist of a pair of springs (77) correspondingly linked to each one of the clamps (72) that are housed in a cavity (78) present in the secondary support piece (71) while the elastic means which act in a horizontal direction consist of helical rods (79) housed in transverse through holes present in each one of the clamps (72).

The machine (1) includes non-motorised rotational means which rotate the gripping element from a vertical position to a rotated position of essentially 90° oriented toward the paraffin supply means.

As can be seen more clearly in figure 5, the aforementioned rotational means consists of a guide element formed by an elongated fixed rod (13) which runs longitudinally in the direction of the trajectory of the gripping elements held by a support structure (14), wherein the rod (13) is provided with a series of bends such that they define a pair of curved segments (130) separated by a rectilinear segment (131), such that one of the curved segments of the rod is in front of the container (8) while the other curved segment (130) is oriented in front of the container (10) such that it facilitates the orientation of the graft supported by the gripper towards the inside of the container (10) with water.

In order to facilitate bending of the gripping elements for linear movement, the two ends of the rod have inclined segments (132) with respect to the longitudinal axis of the rod, said inclined segments (132) being divergent from one another.

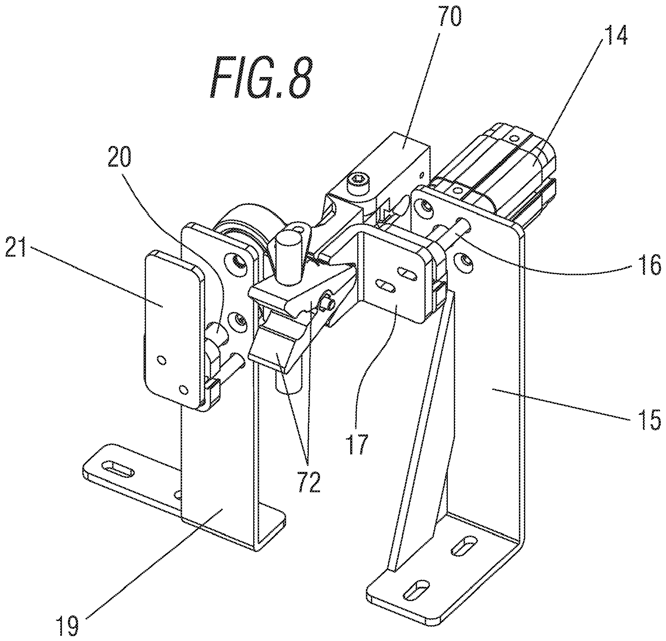

With regard to the expelling means, and a shown in greater detail in figure 8, they have a first pneumatic actuator (14) fixed to a support plate (15), an axially movable piston (16) protruding that has coupled to the end thereof a pusher (17), such that in an extended position of the piston (16), said pusher (17) makes contact with the lower end of the gripping clamps (72) causing the gripper to open and releasing the graft from the cavity (75) wherein the graft is housed.

Additionally, the expelling means may include a second pneumatic actuator fixed to a support plate (19) which acts in a synchronised way with respect to the pneumatic actuator, such that said second actuator has an axially movable piston (20) which acts on a second pusher (21) which expels the graft of the gripper.

In reference to the cutting means, they have a cutting blade (22) mounted on a blade holder (23) which may move vertically during the cutting operation. The cutting blade (22) is connected to a pneumatic cylinder (24) and is connected to a counter blade (27) located in the lower part which may move slightly as is coupled to an elastic spring (28). The cutting means are located in a vertical turret (25) protected by an outer housing (26) which protects the cutting means against blows and dirt. To facilitate the disposal of remains of the cut stems, a ramp (29) is arranged below the cutting blade and joined to the vertical turret (25).

Additionally, on one side of the vertical turret, the cutting means have a vertically movable centring means linked to the movement of the cutting blade in order to axially position the two stems joined together.

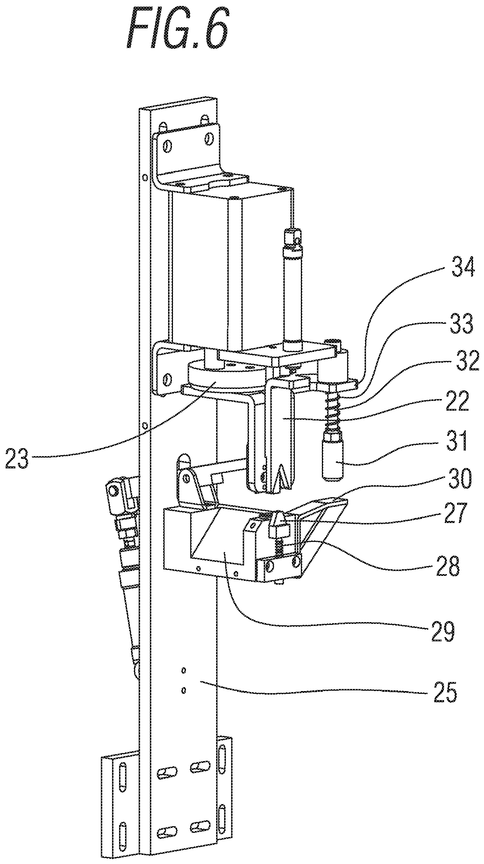

As can be seen in detail in figure 6, these centring means comprise a contact surface (30), on which a pressure element (31) is arranged facing said contact surface, which is fixed to the end of a vertically movable shaft (32) provided with an elastic spring (33) which butts up against a plate (34).

The functioning of the different parts is activated by means of a push button (35) that is managed by an electronic control unit which is located inside a box (36) provided with an access door.

The automated process for producing seedlings or grafts of woody plants is described below, based on the joining of two stems of different plant species, wherein only one worker is required to place the stems in the machine, although it must be mentioned that there is the possibility that the stems may also be arranged automatically.

First, a worker places two stems from different plant species in two adjacent or consecutive gripping elements which, just as previously described, move linearly.

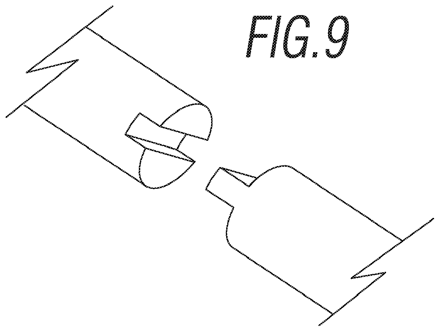

Subsequently, a first plant stem is cut by the blade which forms part of the cutting means, such that a cut part remains connected to the cutting means while the other part of this same stem is disposed of, and a second consecutive plant stem is cut with the same cutting blade which has a complementary cut to the cut made in the first stem. In the same area of the cutting means, the joining of the two previously cut portions is carried out over the gripping element in such a way that a graft or seedling is obtained which corresponds to the two different plant stems. The joining of the two portions is carried out by making the cut of the second plant stem. The joining of the two stem portions is done by means of male-female connection (see figure 9), which is a commonly known coupling in this application field for joining grafts, and therefore it is not necessary to go into further detail on the description thereof.

Subsequently, the join area of the graft supported in the gripping element is coated with the paraffin coating which properly conserves the area, and the area coated with paraffin is then cooled with water. Lastly, with the help of the previously described expelling means, the graft is expelled from the support element to a container for the subsequent transportation thereof.

The details, shapes, dimensions and other accessory elements used in the manufacture of the machine of the invention may be conveniently substituted for others that do not detract from the scope defined by the claims included below.

## Claims

1. A machine for producing seedlings or grafts of woody plants (1), **characterized in that** it comprises:
- motorised cutting means for cutting stems and joining two previously cut stems by fitting the two opposite ends thereof to obtain a graft;
- paraffin supply means provided for coating the graft join area;
- motorised movement means that transport the graft from an area equipped with the cutting means to an expelling area, outside of the machine, the movement means having a plurality of gripping elements (7) for securing the stems and grafts mounted on a means of transport, each of said gripping elements (7) being susceptible of rotating with respect to the means of transport in the area where the paraffin supply means are located; and
- means for expelling the graft for extracting the graft from the gripping element (7) outwards.

2. The machine (1) according to claim 1, **characterised in that** it includes cooling means to cool the area of the graft that is coated with paraffin, said cooling means being arranged behind the paraffin supply means.

3. The machine (1) according to claim 1, **characterised in that** the means of transport comprise a chain or belt that defines a closed loop by means of two rotating elements separated from each other, at least one of which being linked to motor means.

4. The machine (1) according to claim 1, **characterised in that** each one of the gripping elements (7) comprises a gripper provided with a support piece (70) fixed to the means of transport and a secondary support piece (71) which is articulated in a rotational way to the support piece, wherein arranged in the secondary support piece (71) is a pair of clamps (72) facing each other and joined to one another which, in a closed condition, define a cavity susceptible of housing the stem and/or graft, each one of the clamps (72) including elastic means.

5. The machine (1) according to claim 4, **characterised in that** the support piece (70) and the secondary support piece (71) are articulated by means of a rotation shaft.

6. The machine (1) according to claim 4, **characterised in that** each one of the gripping elements (7) comprises elastic means which act on each one of the clamps (72) in a vertical direction and elastic means which act in a horizontal direction.

7. The machine (1) according to claim 1, **characterised in that** it includes non-motorised rotational means which rotate the gripping element (7) from a vertical position to a rotated position of essentially 90° oriented toward the paraffin supply means.

8. The machine (1) according to claim 7, **characterised in that** the non-motorised gripping means consists of an elongated fixed rod (13) running the same direction as the trajectory of the gripping elements (7) held by a support structure, wherein the fixed rod (13) is provided with a series of bends defining a plurality of curved segments (130) separated by a rectilinear segment, such that at least one of the curved segments (130) of the fixed rod (13) is connected to the paraffin supply means.

9. The machine (1) according to claim 8, **characterised in that** the two ends of the fixed rod (13) have inclined segments (132) with respect to the longitudinal axis of the fixed rod (13), said inclined segments (132) being divergent from one another.

10. The machine (1) according to claim 1, **characterised in that** paraffin supply means comprise a refillable paraffin container (8) open at the top, associated with a paraffin feeder (9).

11. The machine (1) according to claim 2, **characterised in that** cooling means comprise a container (10) open at the top which may be refilled with a cooling liquid.

12. The machine (1) according to claim 11, **characterised in that** the cooling liquid is water.

13. The machine (1) according to claim 1, **characterised in that** it includes a collapsible protective cover (5) that covers the motorised movement means.

14. The machine (1) according to claim 13, **characterised in that** the protective cover (50) has an upper horizontal segment that includes a recessed region (50), said recessed region (50) being arranged before the area of the cutting means in the advance direction of the gripping elements (7).

15. The machine (1) according to claims 1 and 4, **characterised in that** the expelling means have a pneumatic actuator that in an extended position of an axially movable piston, said piston pushes the lower end of the gripping element (7) so that it opens the gripper, releasing the graft from the cavity wherein the graft is housed.

16. The machine (1) according to claims 1 and 15, **characterised in that** the expelling means may include a second pneumatic actuator which acts in a synchronised way with respect to the pneumatic actuator, such that said second actuator has an axially movable piston which acts on a second pusher.

17. The machine (1) according to claim 1, **characterised in that** the cutting means have a vertically movable cutting blade linked to motor means.

18. The machine (1) according to claim 1, **characterised in that** the cutting means have a vertically movable centring means connected to the movement of the cutting blade (22) in order to axially position the two stems joined together.

19. The machine (1) according to claim 18, **characterised in that** the centring means comprise a contact surface on which a pressure element (31) is arranged facing said contact surface, which is fixed to the end of a vertically movable shaft (32) provided with an elastic spring (33) which butts up against a plate (34).

20. An automated process to produce seedlings or grafts of woody plants based on the joining of two stems of different plant species, **characterised in that** it comprises the following stages:
a) Placing two stems of different plant species in two adjacent and linearly movable gripping elements;
b) Cutting a first plant stem with a cutting means, such that a cut part remains connected to the cutting means and has on one of the ends thereof a termination with an extension;
c) Cutting a second plant stem with the cutting means such that it has a complimentary cut to the cut made on the first stem, such that one of the ends thereof has a termination with a slit with dimensions adaptable to the dimension of the extension;
d) Joining two cut portions by the ends with the complimentary terminations on the gripping element to obtain a graft or seedling which corresponds to the two different plant stems;
e) Coating the join area of the graft supported by the gripping element with a paraffin coating;
f) Cooling the paraffin coated area by means of a liquid cooler, preferably water; and
g) Expelling the graft from the support element.
